(19) Europäisches Patentamt
European Patent Office
Office européen des brevets

(11) Veröffentlichungsnummer : **0 386 571 B1**

# (12) EUROPÄISCHE PATENTSCHRIFT

(45) Veröffentlichungstag der Patentschrift :
**09.06.93 Patentblatt 93/23**

(51) Int. Cl.$^5$ : **C08F 8/30**

(21) Anmeldenummer : **90103668.1**

(22) Anmeldetag : **26.02.90**

## (54) Verfahren zur Herstellung carbazolsubstituierter Polyacrylate oder Polymethacrylate, die so hergestellten Produkte und ihre Verwendung.

(30) Priorität : **28.02.89 DE 3906246**

(43) Veröffentlichungstag der Anmeldung :
**12.09.90 Patentblatt 90/37**

(45) Bekanntmachung des Hinweises auf die Patenterteilung :
**09.06.93 Patentblatt 93/23**

(84) Benannte Vertragsstaaten :
**BE CH DE ES FR GB IT LI NL SE**

(56) Entgegenhaltungen :
**US-A- 3 243 476**
**JOURNAL OF POLYMER SCIENCE, Band 26, 1988, Seiten 441-446; C.-J. HU et al.: "Synthesis and photoinduced discharge characteristics of polyacrylates with pendant carbazole group"**

(56) Entgegenhaltungen :
**DIE MAKROMOLEKULAIRE CHEMIE, Band 42, 1960, Seiten 197-204; R.C. SCHULZ et al.: "Umsetzungen löslicher Polyacrylsäurechloride mit Aminen"**

(73) Patentinhaber : **BASF Aktiengesellschaft**
**Carl-Bosch-Strasse 38**
**W-6700 Ludwigshafen (DE)**

(72) Erfinder : **Leyrer, Reinhold J., Dr.**
**Menzelstrasse 4**
**6700 Ludwigshafen (DE)**
Erfinder : **Lauke, Harald, Dr.**
**Sophienstrasse 10**
**W-6800 Mannheim 1 (DE)**
Erfinder : **Strohriegl, Peter, Dr.**
**Bayreuther Strasse 15 a**
**W-8581 Hummeltal (DE)**
Erfinder : **Haarer, Dietrich, Prof., Dr.**
**Hangweg 30**
**W-8580 Bayreuth (DE)**

EP 0 386 571 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von seitenständige Carbazolyl-Gruppen enthaltenden Acrylat- und/oder Methacrylat-Polymerisaten, die sich als photoleitfähige Verbindungen für den Einsatz in festen, photoleitfähigen Schichten eignen. Die Erfindung betrifft des weiteren die Verwendung der nach dem erfindungsgemäßen Verfahren hergestellten Produkte in elektrophotographischen Aufzeichnungselementen mit einem elektrisch leitfähigen Träger und einer festen, photoleitfähigen Schicht.

Feste, photoleitfähige Schichten mit einer photoleitfähigen organischen Verbindung sind für elektrophotographische Aufzeichnungsmaterialien, wie Kopierfilme oder elektrophotographische Offset-Druckplatten, zunehmend von Interesse. Als organische Photoleiter, die in den festen, photoleitfähigen Schichten eingesetzt werden, werden polymere Materialien bevorzugt. Unter den bekannten polymeren photoleitfähigen Verbindungen kommt dem Poly-N-Vinylcarbazol wegen seiner guten Eigenschaften als Photoleiter besondere Bedeutung zu. Neben dem Poly-N-Vinylcarbazol haben dabei gerade in jüngerer Zeit auch andere N-Carbazolyl-Gruppen enthaltende Polymere für die Untersuchung ihrer Photoleitereigenschaften eine gewisse Aufmerksamkeit gefunden.

So wird beispielsweise in Journ. Polym. Sci., Polym. Letters Ed. 23, S. 151 bis 154 (1985) sowie in Macromolecules, 18, S. 1043 bis 1045 (1985) beschrieben, daß die Lochtransporteigenschaften von radikalisch polymerisiertem Poly(2-N-carbazolylethyl-methacrylat), trotz des niedrigeren Gehaltes an Carbazol-Chromophoren, mit denen von Poly(N-Vinylcarbazol) vergleichbar sind, während die Lochtransporteigenschaften von radikalisch polymerisiertem Poly(2-N-carbazolylethyl-acrylat) sogar um eine Größenordnung höher liegen. Nach Macromolecules, 20, S. 712 bis 716 (1987) liegen die Lochtransporteigenschaften von anionisch polymerisiertem, isotaktischem Poly(2-N-carbazolylethyl-acrylat) nochmals höher als die des ataktischen Polyacrylats, so daß diese Polymeren durchaus als Photoleiter in elektrophotographischen Aufzeichnungsmaterialien interessant erscheinen.

Die Herstellung der bekannten Poly(2-N-carbazolylethyl-acrylate) und Poly(2-N-carbazolylethyl-methacrylate) erfolgte dabei bisher durch Polymerisation von monomerem 2-(N-Carbazolyl)ethyl-acrylat bzw. -methacrylat. Diese Monomeren werden in aller Regel durch Umsetzung von N-(2-Hydroxyethyl)-carbazol mit Acrylsäurechlorid bzw. Methacrylsäurechlorid hergestellt und müssen vor ihrer Polymerisation sorgfältig von Verunreinigungen, wie z.B. noch nicht umgesetztem (Meth)Acrylsäurechlorid, befreit werden, da ansonsten die Photoleitereigenschaften der daraus hergestellten Poly(meth)acrylate nachteilig beeinflußt werden können. Ferner hat sich herausgestellt, daß man bei diesem Verfahren in der Variation des Molekulargewichts der Poly(2-N-carbazolylethyl-acrylate) bzw. Poly(2-N-carbazolylethyl-methacrylate) eingeschränkt ist. Diese bekannten seitenständige Carbazolyl-Gruppen enthaltenden Poly(meth)acrylate haben darüber hinaus, in gleicher Weise wie das Poly-N-Vinylcarbazol, den Nachteil, daß sie sich aufgrund ihrer Sprödigkeit, geringen Flexibilität und ihrer ungenügenden Haftungseigenschaften nur beschränkt für den Einsatz in elektrophotographischen Aufzeichnungselementen eignen, die einer hohen Biegebeanspruchung ausgesetzt sind, wie sie beispielsweise beim Aufspannen von elektrophotographischen Aufzeichnungselementen auf Trommeln oder Zylinder auftritt.

Außerdem ist aus der Publikation von Chau-Jin Hu et al., "Synthesis and Photoinduced Dischange of Polyacrylates with Pendant Carbazole Group", in Journal of Polymer Science, Part C: Polymer Letters, Volume 26, Seiten 441 bis 446, 1988, ein Verfahren zur Herstellung von Polyacrylaten der allgemeinen Formel (IIa)

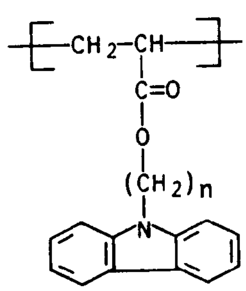

(IIa),

worin n für 2, 3, 4, 5, 6 und 8 steht, bekannt, bei dem man zunächst die betreffenden N-(ω-Carbazolylalkyl)acrylate aus den N-(ω-Bromalkyl)carbazolen und Natriumacrylat herstellt, um sie anschließend radikalisch zu polymerisieren.

Aufgabe der vorliegenden Erfindung war es, ein Verfahren zur Herstellung von seitenständige Carbazolyl-Gruppen enthaltenden Polyacrylaten oder Polymethacrylaten aufzuzeigen, daß in einfacher Weise durchgeführt werden kann und zu Produkten führt, die sich in vorteilhafter Weise als Photoleiter in elektrophotographischen Aufzeichnungselementen, insbesondere elektrophotographischen Offsett-Druckplatten, einsetzen lassen.

Überraschenderweise wurde nun gefunden, daß diese Aufgabe gelöst wird, wenn man N-(ω-Hydroxyalkyl)carbazole in einer polymeranalogen Reaktion mit Poly(meth)acrylsäurechloriden umsetzt.

Gegenstand der Erfindung ist dementsprechend ein Verfahren zur Herstellung von seitenständige Carbazolyl-Gruppen enthaltenden Acrylat- und/oder Methacrylat-Polymeren, welches dadurch gekennzeichnet ist, daß man Polymerisate des Acrylsäurechlorids und/oder Methacrylsäurechlorids in polymeranaloger Reaktion in Lösung mit Alkoholaten, insbesondere den Alkalialkoholaten, von N-(ω-Hydroxyalkyl)carbazolen umsetzt und anschließend das Reaktionsprodukt aus der Lösung isoliert.

Gegenstand der Erfindung sind weiterhin die nach diesem Verfahren erhaltenen seitenständige Carbazolyl-Gruppen enthaltenden Polymethacrylate, wie sie nachfolgend näher beschrieben werden.

Gegenstand der Erfindung sind darüber hinaus elektrophotographische Aufzeichnungselemente mit einem elektrisch leitenden Träger und einer photoleitfähigen Schicht, die als Photoleiter in der photoleitfähigen Schicht die nach dem erfindungsgemäßen Verfahren hergestellten, seitenständige Carbazolyl-Gruppen enthaltenden Polymethacrylate enthalten.

Das erfindungsgemäße Verfahren führt zu Produkten mit großer Reinheit, ohne daß es hierzu besonderer oder aufwendiger Reinigungsschritte bedürfte. Obwohl polymeranaloge Umsetzungen meistens schwierig in reproduzierbarer Weise durchzuführen sind und dementsprechend häufig zu uneinheitlichen Produkten und unerwünschten Nebenreaktionen führen, hat es sich überraschenderweise gezeigt, daß die erfindungsgemäße Umsetzung glatt und problemlos abläuft und hierdurch seitenständige Carbazolyl-Gruppen enthaltende Poly(meth)acrylate mit gewünschten Eigenschaften gezielt und reproduzierbar herzustellen sind. Ein Vorteil des erfindungsgemäßen Verfahrens besteht darin, daß es eine bessere Variation der Molekulargewichte der Endprodukte erlaubt und insbesondere auch leichter höhermolekulare Produkte hergestellt werden können, als bei dem bisher beschriebenen Verfahren durch Polymerisation von monomeren N-Carbazolylalkyl-acrylaten bzw. N-Carbazolylalkyl-methacrylaten. Die erfindungsgemäß durch polymeranaloge Umsetzung hergestellten Produkte sind vielfach elastischer und flexibler als die entsprechenden durch Polymerisation der entsprechenden N-Carbazolylalkyl-Gruppen enthaltenden Acrylate bzw. Methacrylate hergestellten. Die erfindungsgemäß hergestellten seitenständige Carbazolyl-Gruppen enthaltenden Polymethacrylate besitzen gute Photoleitereigenschaften und können insbesondere in vorteilhafter Weise für elektrophotographische Aufzeichnungselemente eingesetzt werden, die zum Aufspannen auf Trommeln oder Zylinder geeignet sind.

Eine Ausgangskomponente des erfindungsgemäßen Verfahrens sind Polymerisate des Acrylsäurechlorids und/oder Methacrylsäurechlorids. Insbesondere werden hierzu Poly(acrylsäurechlorid) oder Poly(methacrylsäurechlorid) eingesetzt. Es ist jedoch grundsätzlich aber auch möglich, Copolymerisate des Acrylsäurechlorids und Methacrylsäurechlorids untereinander als Ausgangskomponente zu verwenden oder aber auch Copolymerisate, die neben Acrylsäurechlorid und/oder Methacrylsäurechlorid weitere Comonomeren in untergeordneten Mengen, d.h. im allgemeinen unter 40 Gew.% und insbesondere unter etwa 20 Gew.%, bezogen auf das Copolymerisat, einpolymerisiert enthalten. Als solche weiteren Comonomeren kommen beispielsweise Alkylacrylate oder Alkylmethacrylate mit z.B. 1 bis 8 C-Atomen im Alkylrest in Betracht, aber auch z.B. Acrylsäure und/oder Methacrylsäure.

Die als Ausgangsprodukt für das erfindungsgemäße Verfahren dienenden (Meth)Acrylsäurechlorid-Polymerisate sind als solche bekannt und können nach den üblichen Methoden, beispielsweise durch radikalische Polymerisation von Acrylsäure- bzw. Methacrylsäurechlorid gegebenenfalls zusammen mit weiteren Comonomeren, hergestellt werden. Ein entsprechendes Polymerisationsverfahren ist beispielsweise in Makromolekulare Chemie, 42, 189 (1960) beschrieben. Das Molekulargewicht der als Ausgangskomponente in dem erfindungsgemäßen Verfahren eingesetzten (Meth)Acrylsäurechlorid-Polymerisate kann dabei in weiten Grenzen schwanken; es soll jedoch hoch genug sein, daß die bei dem erfindungsgemäßen Verfahren resultierenden Endprodukte bei Raumtemperatur fest und nicht klebrig sind. Bevorzugt werden daher als Ausgangsmaterial solche (Meth)Acrylsäurechlorid-Polymerisate, die ein möglichst hohes Molekulargewicht, insbesondere ein Molekulargewicht (Gewichtsmittel) über 50 000, besitzen.

Die (Meth)Acrylsäurechlorid-Polymerisate werden erfindungsgemäß mit Alkoholaten von N-(ω-Hydroxyalkyl)carbazolen umgesetzt. Hierbei geht man insbesondere von N-(ω-Hydroxyalkyl)carbazolen mit 2 bis 11 C-Atomen, insbesondere 3 bis 8 C-Atomen, im Alkylrest aus. Vorzugsweise entsprechen die für das erfindungsgemäße Verfahren herangezogenen N-(ω-Hydroxyalkyl)carbazole der allgemeinen Formel (I),

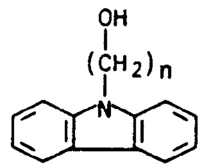

(I)

worin n für eine ganze Zahl im Bereich von 2 bis 11, insbesondere im Bereich von 3 bis 8, steht.

Die N-(ω-Hydroxyalkyl)carbazole werden für ihre Umsetzung mit den (Meth)Acrylsäurechlorid-Polymerisaten nach den an sich bekannten und üblichen Methoden in die entsprechenden Alkoholate, insbesondere die Alkalialkoholate, beispielsweise des Lithiums oder Natriums, überführt. Als besonders einfach und vorteilhaft für die Herstellung der in Rede stehenden Alkoholate hat sich dabei die Umsetzung der N-(ω-Hydroxyalkyl)carbazole mit Butyllithium in einem wasserfreien Lösungsmittel, beispielsweise in Ethern, wie Tetrahydrofuran und dgl., erwiesen.

Die Herstellung der N-(ω-Hydroxyalkyl)carbazole ist bekannt und in der einschlägigen Fachliteratur beschrieben. Sie kann, ausgehend vom Carbazol, beispielsweise nach dem folgenden Reaktionsschema vorgenommen werden:

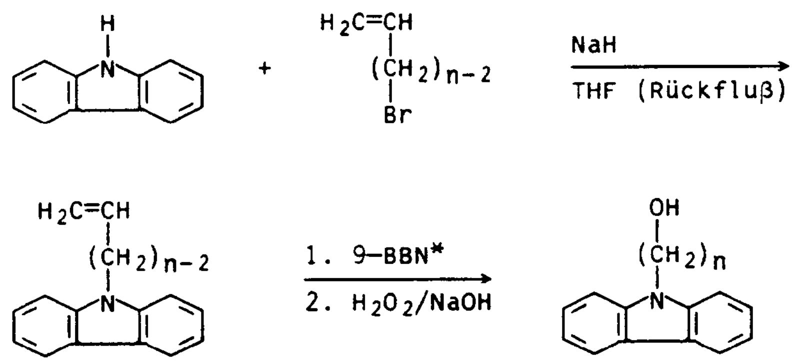


(I)

* 9-BBN: Borabicyclo[3.3.1]nonan

Nach diesem Reaktionsschema wird Carbazol mit den entsprechenden ω-Alkenylbromiden zu den N-Alkenylcarbazolen umgesetzt. Diese Umsetzung kann beispielsweise entsprechend den Vorschriften von J. Heller, D. J. Lyman und W. A. Hewett, Makromolekulare Chemie, 73, 48 (1964) erfolgen. Aus den N-Alkenylcarbazolen erhält man die entsprechenden Alkohole der allgemeinen Formel (I) beispielsweise durch Hydroborierung mit 9-Borabicyclo[3.3.1.]nonan (9-BBN). Die Hydroborierungsreaktion kann analog einer Vorschrift von H. C. Brown, E. F. Knights und G. G. Scouten, Journal Am. Chem. Soc. 96, 7765 (1974) durchgeführt werden. Ein anderer Weg zur Herstellung von N-(ω-Hydroxyalkyl)carbazolen ist beispielsweise in der eingangs zitierten Literaturstelle Macromolecules 20, 712-716 (1987) beschrieben.

Die polymeranaloge Umsetzung der Alkoholate der N-(ω-Hydroxyalkyl)carbazole mit den (Meth)Acrylsäurechlorid-Polymerisaten erfolgt unter wasserfreien Bedingungen in Lösung durch Zusammengeben der Komponenten und Rühren. Als Lösungsmittel kommen dabei die üblichen organischen, wasserfreien Lösungsmittel in Betracht, die gegenüber den Reaktionskomponenten inert sind. Als Beispiele für solche Lösungsmittel seien die Ether, wie beispielsweise Tetrahydrofuran, angeführt. Obwohl die Reaktion zwischen den in Rede stehenden Alkoholaten und den (Meth)Acrylsäurechlorid-Polymerisaten auch bei erhöhter Temperatur durchgeführt werden kann, hat sich dieses nicht als notwendig und vorteilhaft erwiesen, sondern wird die Umsetzung üblicherweise bei Raumtemperatur durchgeführt. Die Reaktion ist dabei im allgemeinen nach einigen Stunden abgeschlossen. Geht man bei dem erfindungsgemäßen Verfahren von Poly(acrylsäurechlorid) aus, so werden zur Umsetzung vorzugsweise die Alkoholate von N-(ω-Hydroxyalkyl)carbazolen der allgemeinen Formel (I) herangezogen, für die in der allgemeinen Formel (I) n für eine ganze Zahl im Bereich von 3 bis 10, insbesondere 3 bis 6, steht. Für den Fall, daß Poly(methacrylsäurechlorid) aus Ausgangskomponente in dem erfindungsgemäßen Verfahren eingesetzt wird, wird die polymeranaloge Umsetzung vorzugsweise mit Alkoholaten von N-(ω-Hydroxyalkyl)carbazolen der allgemeinen Formel (I) durchgeführt, bei denen in der allgemeinen Formel (I) n für eine ganze Zahl im Bereich von 4 bis 11, insbesondere von 4 bis 7, steht.

Üblicherweise werden die (Meth)Acrylsäurechlorid-Polymerisate und die Alkoholate der N-(ω-Hydroxyalkyl)carbazole in solchen Mengenverhältnissen eingesetzt und wird die Reaktion so geführt, daß im wesentlichen alle Säurechloridgruppen der (Meth)Acrylsäurechlorid-Polymerisate mit den Alkoholaten unter Ausbildung der entsprechenden Carbazolylalkyl-Estergruppierungen umgesetzt worden sind. Die polymeranaloge Reaktion kann jedoch auch so geführt werden, daß ein gewisser Anteil der Säurechloridgruppen der (Meth)Acrylsäurechlorid-Polymerisate, beispielsweise 5 bis 20 % dieser Säurechlorid-Gruppen, nicht mit den Alkoholaten umgesetzt wird, sondern als Säurechloridgruppen in dem Reaktionsprodukt verbleibt. Auch wenn die Umsetzung der Säurechlorid-Gruppen der (Meth)Acrylsäurechlorid-Polymerisate mit den Alkoholaten im wesentlichen vollständig durchgeführt wird, enthält das Endprodukt häufig noch einen geringen Anteil, üblicherweise bis maximal 3 %, an nicht umgesetzten Säurechloridgruppierungen. Die in dem polymeren Reaktionsprodukt der polymeranalogen Umsetzung verbliebenen restlichen Säurechlorid-Gruppierungen können bei der Aufarbeitung des polymeren Reaktionsproduktes hydrolysiert und in COOH-Gruppen überführt werden. In diesem Fall resultieren seitenständige Carbazolyl-Gruppen enthaltende Poly(meth)acrylate, die neben wiederkehrenden N-Carbazolylalkyl(meth)acrylat-Einheiten auch noch einen geringen Anteil an (Meth)Acrylsäure-Einheiten eingebaut enthalten.

Die Isolierung der nach dem erfindungsgemäßen Verfahren hergestellten, seitenständige Carbazolyl-Gruppen enthaltenden Poly(meth)acrylate aus der Reaktionslösung kann nach den an sich üblichen und bekannten Methoden, beispielsweise durch Ausfällen der Polymeren mit einem Nicht-Lösungsmittel, wie z.B. niederen Alkanolen, und Abfiltrieren des ausgefällten Polymeren erfolgen. Das so erhaltene Produkt kann gewünschtenfalls zur weiteren Reinigung noch einmal umgefällt werden.

Die nach dem erfindungsgemäßen Verfahren hergestellten, seitenständige Carbazolyl-Gruppen enthaltenden Polymethacrylate enthalten dementsprechend vorzugsweise wiederkehrende Einheiten der allgemeinen Formel (II)

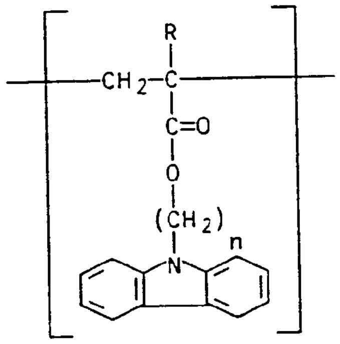

(II)

bzw. sind hieraus aufgebaut. In der allgemeinen Formel (II) stehen dabei R für eine Methylgruppe und n für eine ganze Zahl im Bereich von 2 bis 11, insbesondere im Bereich von 3 bis 8. Besonders günstig ist es, wenn für den Fall, daß R ein Wasserstoffatom bedeutet, n eine ganze Zahl im Bereich von 3 bis 10, insbesondere von 3 bis 6 ist, und für den Fall, daß R eine Methylgruppe darstellt, n eine ganze Zahl im Bereich von 4 bis 11, insbesondere von 4 bis 7, darstellt. Neben den wiederkehrenden Einheiten der allgemeinen Formel (II) können die erfindungsgemäß hergestellten Polymeren auch noch einen untergeordneten Anteil, üblicherweise weniger als 40 %, insbesondere bis zu 20 %, an anderen wiederkehrenden Einheiten, beispielsweise Alkylacrylat-, Alkylmethacrylat- sowie insbesondere Acrylsäure- und/oder Methacrylsäure-Einheiten eingebaut enthalten.

Das Molekulargewicht (Gewichtsmittel) der erfindungsgemäß hergestellten, seitenständige Carbazolyl-Gruppen enthaltenden Poly(meth)acrylate liegt üblicherweise im Bereich von 20 000 bis 300 000, insbesondere 50 000 bis 200 000.

Die nach dem erfindungsgemäßen Verfahren hergestellten, seitenständige Carbazolyl-Gruppen enthaltenden Polymethacrylate besitzen eine gute Photoleitfähigkeit und lassen sich aufgrund ihres sonstigen Eigenschaftsprofils mit Vorteil zur Herstellung von festen, photoleitfähigen Schichten, insbesondere in elektrophotographischen Aufzeichnungselementen, verwenden. Für die Anwendung in elektrophotographischen Offsett-Druckplatten ist es dabei besonders günstig, daß die erfindungsgemäß hergestellten, seitenständige Carbazolyl-Gruppen enthaltenden Polymethacrylate neben den wiederkehrenden Einheiten der allgemeinen Formel (II) auch noch wiederkehrende Acrylsäure- und/oder Methacrylsäure-Einheiten in einem solchen Maße eingebaut enthalten können, daß hierdurch Produkte entstehen, die eine hinreichende Alkalilöslichkeit besitzen, wie sie beim Auswaschen von belichteten elektrophotographischen Offsett-Druckplatten mit alkalischen Entwicklerlösungen gewünscht und gefordert wird.

Die aus den erfindungsgemäß hergestellten, seitenständige Carbazolyl-Gruppen enthaltenden Polymethacrylaten gebildeten photoleitfähigen Schichten sind bei Raumtemperatur fest, flexibel, nicht spröde und

nicht klebrig. Sie weisen eine gute Haftung gegenüber metallischen Oberflächen auf, so daß sie ohne Mitverwendung eines zusätzlichen Haftvermittlers oder einer zusätzlichen Haftschicht direkt auf die Träger von elektrophotographischen Aufzeichnungselementen aufgebracht werden können, selbst bei solchen elektrophotographischen Aufzeichnungselementen, die in ihrer Anwendung, etwa beim Aufspannen auf Trommeln oder Zylinder, einer hohe Biegebeanspruchung ausgesetzt sind. Die erfindungsgemäß hergestellten, seitenständige Carbazolyl-Gruppen enthaltenden Polymethacrylate eignen daher hervorragend als Photoleiter für den Einsatz in Photoleiter-Schichten von Kopierfolien oder elektrophotographischen Offsett-Druckplatten. Die Herstellung von photoleitfähigen Schichten aus den erfindungsgemäß hergestellten, seitenständige Carbazolyl-Gruppen enthaltenden Polymethacrylaten kann nach den an sich bekannten Methoden, z.B. durch Gießen aus Lösung und Abdampfen des Lösungsmittels, erfolgen.

Bei ihrem Einsatz als Photoleiter in photoleitfähigen Schichten können die erfindungsgemäß hergestellten, seitenständige Carbazolyl-Gruppen enthaltenden Polymethacrylate, in gleicher Weise wie etwa Poly-N-Vinylcarbazol, zusammen mit Dotierungs- und/oder Sensibilisierungsmitteln eingesetzt werden. Dabei kommen die für Poly-N-Vinylcarbazol üblichen und an sich bekannten Dotierungs- und Sensibilisierungsmittel in Betracht, wie z.B. Elektronenakzeptor-Materialien, die mit den Carbazol-Gruppen einen Ladungsübertragungskomplex zu bilden vermögen. Stellvertretend und beispielhaft hierfür seien Lewis-Säuren, wie 2,4,7-Trinitrofluorenon, 2,4,5,7-Tetranitrofluorenon, Chloranil oder Tetracyanochinondimethan, genannt. Zu den geeigneten Sensibilisierungsmitteln gehören beispielsweise organische Farbstoffe, die die spektrale Empfindlichkeit der photoleitfähigen Schicht verbessern, als auch Farbstoffe und Pigmente, die unter dem Einfluß von aktinischem Licht Ladungsträger des elektrischen Stromes zu erzeugen und diese unter Mithilfe eines von außen auf die photoleitfähige Schicht aufgeprägten elektrischen Feldes auf den Photoleiter zu übertragen vermögen. Je nach Art des verwendeten Sensibilisierungsmittels und des Einsatzgebietes der photoleitfähigen Schicht bzw. des elektrophotographischen Aufzeichnungselements kann die Sensibilisierung in an sich bekannter Weise entweder homogen oder heterogen erfolgen. Bei homogen sensibilisierten photoleitfähigen Schichten liegt der Photoleiter und das Sensibilisierungsmittel in homogener Mischung miteinander in einer einlagigen Schicht vor. Bei der heterogenen Sensibilisierung ist die photoleitfähige Schicht mehrlagig, insbesondere zweilagig, in Art einer sogenannten Kompositstruktur aufgebaut, wobei die erste Lage das Sensibilisierungsmittel enthält und eine darüber angeordnete zweite Lage von dem Photoleiter gebildet wird.

Für die einlagigen, homogen sensibilisierten photoleitfähigen Schichten kommen in üblicher und an sich bekannter Weise insbesondere die löslichen organischen Farbstoffe als Sensibilisierungsmittel in Betracht. Als Beispiele hierfür seien die Triarylmethan-Farbstoffe, Xanthen-Farbstoffe, Cyanin-Farbstoffe, Thiazin-Farbstoffe und andere genannt. Für die mehrlagigen, heterogen sensibilisierten photoleitfähigen Schichten werden hingegen vorzugsweise organische Pigmente für die Sensibilisierung verwendet. Daneben kommen aber auch anorganische, unter Einwirkung von Licht Ladungsträger des elektrischen Stromes erzeugende Materialien, wie beispielsweise Selen, als Sensibilisierungsmittel für die mehrlagigen photoleitfähigen Schichten in Betracht. Zu den als Sensibilisierungsmittel geeigneten Farbstoffen oder Pigmenten für die mehrlagig aufgebauten, heterogen sensibilisierten photoleitfähigen Schichten gehören u.a. Azofarbstoffe, Phthalocyanine und Isoindolinfarbstoffe. Als besonders günstig und vorteilhaft für die Sensibilisierung sowohl der einlagigen, homogen sensibilisierten als auch der mehrlagigen, heterogen sensibilisierten festen photoleitfähigen Schichten haben sich Farbstoffe oder Pigmente aus der Reihe der Perylen-3,4:9,10-tetracarbonsäurederivate erwiesen. Die Sensibilisierungsmittel sind in den einlagigen, homogen sensibilisierten photoleitfähigen Schichten im allgemeinen in einer Menge von etwa 0,5 bis 10 Gew.%, bezogen auf die in der photoleitfähigen Schicht enthaltene photoleitfähige Verbindung, enthalten.

Neben den nach dem erfindungsgemäßen Verfahren hergestellten, seitenständige Carbazolyl-Gruppen enthaltenden Polymethacrylaten als Photoleiter sowie ggf. mitverwendeten Dotierungs- und/oder Sensibilisierungsmitteln hierfür können die erfindungsgemäßen festen, photoleitfähigen Schichten zusätzlich noch weitere Bestandteile der für photoleitfähige Schichten üblichen Art, wie beispielsweise polymere Bindemittel, Netzmittel, Verlaufshilfsmittel, Weichmacher oder dergleichen enthalten. Ein besonderer Vorteil der mit den erfindungsgemäß hergestellten Photoleitern gebildeten festen, photoleitfähigen Schichten liegt darin, daß aufgrund der besonderen Eigenschaften der als Photoleiter eingesetzten, erfindungsgemäß hergestellten seitenständige Carbazolyl-Gruppen enthaltenden Poly(meth)acrylate auf die Mitverwendung von zusätzlichen Bindemitteln oder Weichmachern in der photoleitfähigen Schicht - auch wenn diese grundsätzlich möglich ist - verzichtet werden kann und man dennoch zu festen, flexiblen Schichten mit hoher Haftfestigkeit auf metallischen Trägeroberflächen und guter Photoleitfähigkeit gelangt.

Zur Herstellung von einlagigen, homogen sensibilisierten, festen photoleitfähigen Schichten werden die als Photoleiter dienenden, erfindungsgemäß hergestellten seitenständige Carbazolyl-Gruppen enthaltenden Poly(meth)acrylate homogen mit den Sensibilisierungsmitteln, sowie evtl. weiteren mitverwendeten Zusätzen, vermischt und diese homogene Mischung zu einer Schicht der gewünschten Schichtdicke geformt. Vorteilhafterweise arbeitet man zum Mischen der Komponenten in Lösung in einem organischen Lösungsmittel und werden die Komponenten zur Schichtbildung aus dieser Lösung auf einen Träger so aufgebracht, daß nach dem Ablüften des Lösungsmittels eine Trockenschichtdicke von ca. 0,8 bis etwa 40 µm (je nach Verwendungszweck, bei elektrophotographischen Druckplatten insbesondere 0,8 bis 6 µm und bei Kopierfilmen etwa 5 bis 25 µm) resultiert.

Mehrlagige heterogen sensibilisierte feste, photoleitfähige Schichten werden in an sich bekannter Weise hergestellt, indem auf einen Träger zunächst die erste Lage aus dem Sensibilisierungsmittel, beispielsweise Selen oder einem organischen Farbstoff bzw. Pigment, hergestellt wird. Diese erste Lage kann z.B. durch Aufdampfen des Sensibilisierungsmittels auf den Träger oder durch Gießen aus Lösung und Abdampfen des Lösungsmittels erzeugt werden. Diese erste Lage der mehrlagigen, heterogen sensibilisierten festen, photoleitfähigen Schichten hat im allgemeinen eine Schichtdicke von 0,005 bis 5 µm, insbesondere von 0,1 bis 1,5 µm. Auf diese erste Lage wird anschließend die zweite Lage aus den erfindungsgemäß hergestellten, seitenständige Carbazolyl-Gruppen enthaltenden Poly(meth)acrylaten aufgebracht. Diese zweite Lage wird vorteilhafterweise durch Gießen aus einer Lösung gebildet; ihre Trockenschichtdicke liegt dabei üblicherweise im Bereich von etwa 1 bis 40 µm, vorzugsweise zwischen 5 und 25 µm und insbesondere im Bereich von 7 bis 15 µm.

Wegen ihrer guten Flexibilität, Nichtklebrigkeit bei Raumtemperatur, der Möglichkeit, ihre Alkalilöslichkeit zu variieren, ihrer guten Haftung gegenüber metallischen Oberflächen sowie anderen vorteilhaften Eigenschaften, eignen sich die erfindungsgemäßen festen photoleitfähigen Schichten aus den erfindungsgemäß hergestellten, seitenständige Carbazolyl-Gruppen enthaltenden Poly(meth)acrylaten hervorragend für den Einsatz in elektrophotographischen Aufzeichnungselementen, wie z.B. Kopierfilmen, das sind elektrophotographische Folien für den Kopiersektor, und insbesondere für die Herstellung von elektrophotographischen Offsett-Druckplatten.

In den elektrophotographischen Aufzeichnungselementen sind die erfindungsgemäß gebildeten festen, photoleitfähigen Schichten auf einem elektrisch leitenden Träger aufgebracht. Als elektrisch leitende Träger für die elektrophotographischen Aufzeichnungselemente sind prinzipiell alle elektrisch leitfähigen Trägermaterialien verwendbar, wie sie für elektrophotographische Aufzeichnungselemente der in Rede stehenden Art an sich bekannt und üblich sind. Bevorzugt sind je nach Einsatzgebiet der erfindungsgemäßen elektrophotographischen Aufzeichnungselemente als Trägermaterialien z.B. mit Aluminium, Zinn, Blei, Wismut oder ähnlichen Metallen bedampfte Kunststoff-Folien, vorzugsweise Polyesterfolien, z.B. aus Polyethylenterephthalat oder Polybutylenterephthalat. Als Träger für die erfindungsgemäß gebildeten festen, photoleitfähigen Schichten kommen auch elektrisch leitende Spezialpapiere in Betracht, sowie ferner insbesondere Platten, Bleche oder dgl. aus Metallen, wie z.B. Zink, Magnesium, Nickel, Kupfer oder insbesondere Aluminium. Die metallischen Trägerplatten bzw. -bleche, z.B. aus Aluminium, können dabei in üblicher und an sich bekannter Weise, beispielsweise mechanisch, chemisch oder elektrochemisch, vorbehandelt sein. Neben flachen, ebenen Trägern kommen auch zylinderförmige Träger, beispielsweise Metallzylinder oder Zylinder mit metallischer Oberfläche, in Betracht. Die erfindungsgemäß gebildeten festen, photoleitfähigen Schichten werden für die Herstellung der elektrophotographischen Aufzeichnungselemente in an sich bekannter und üblicher Weise auf die elektrisch leitenden Träger aufgebracht. Vorzugsweise geschieht dies gleichzeitig mit der Herstellung der festen, photoleitfähigen Schichten, beispielsweise dadurch, daß diese photoleitfähigen Schichten aus Lösung auf dem elektrisch leitenden Träger erzeugt werden.

Die elektrophotographischen Aufzeichnungselemente gemäß der Erfindung können dabei, wie für solche Aufzeichnungselemente an sich bekannt und üblich, zwischen dem elektrisch leitenden Träger und der festen, photoleitfähigen Schicht bzw. bei Aufzeichnungselementen mit einer mehrlagigen photoleitfähigen Schicht auf zwischen den einzelnen Lagen der photoleitfähigen Schicht Sperrschichten, beispielsweise aus Metalloxiden, wie Aluminiumoxid, Polymeren, wie z.B. Polyamid, Polyvinylalkohol, Polyacrylat, Polystyrol, oder ähnlichen Systemen, enthalten.

Die elektrophotographischen Aufzeichnungselemente gemäß der Erfindung besitzen hervorragende anwendungstechnische Eigenschaften. So lassen sich beispielsweise erfindungsgemäße elektrophotographische Offsett-Druckplatten nicht nur in sehr einfacher und vorteilhafter Weise für den Druck vorbereiten, sondern es werden hiermit auch ausgezeichnete Druckresultate erzielt.

Die Erfindung wird durch die nachfolgenden Beispiele näher erläutert. Die in den Beispielen genannten Teile und Prozente beziehen sich, sofern nicht anders angegeben, auf das Gewicht.

Beispiel 1

Herstellung von Poly(6-N-carbazolylhexyl-methacrylat)

In einem ausgeheizten 500 ml-Dreihalskolben wurden 200 ml einer Lösung von 9-Borabicyclo[3.3.1.]nonan in Tetrahydrofuran (0,5 mol/l) vorgelegt. Hierzu wurden 100 mmol N-(5-Hexenyl)carbazol in 100 ml trockenem Tetrahydrofuran zugetropft. Anschließend wurde 3 Stunden bei Raumtemperatur gerührt und anschließend nacheinander 60 ml Ethanol, 20 ml 6-normaler Natronlauge und 40 ml Wasserstoffperoxid (30 %ig) zugegeben. Danach wurde das Reaktionsgemisch für eine Stunde am Rückfluß erhitzt. Zur Aufarbeitung wurden anschließend 200 ml Wasser zugegeben und das Tetrahydrofuran abgezogen. Das gebildete N-(6-Hydroxyhexyl)carbazol wurde mit Ether extrahiert, der Ether getrocknet und verdampft. Das erhaltene Rohprodukt wurde anschließend nochmals aus Hexan/Aceton (9:1) umkristallisiert. Das N-(6-Hydroxyhexyl)carbazol wurde in Form weißer Kristalle in 60%iger Ausbeute erhalten und zeigte folgende Produktkenndaten:

IR (KBr): 3270 $cm^{-1}$ (-OH), 1620, 1590, 745, 720 $cm^{-1}$ (Carbazol)

$^1$H-NMR ($CDCl_3$): $\delta$ = 1,3-1,6 (m), 1.8-2.0 (m), 3.61 (t), 4,33 (t), 7,2-7,3 (m), 7,4-7,55 (m), 8,1-8,2 (m) Intensitätsverhältnis: 6:2:2:2:2:4:2

In einem Dreihalskolben wurden zu 7,5 ml Butyllithium (1,6 molare Lösung in Hexan) 15 mmol des vorstehend hergestellten N-(6-Hydroxyhexyl)carbazols in 20 ml trockenem Tetrahydrofuran zugegeben. Anschließend wurden 10 mmol Polymethacrylsäurechlorid in 15 ml Tetrahydrofuran zugesetzt und wurde die Reaktionslösung 3 Stunden bei Raumtemperatur gerührt. Zur Aufarbeitung wurde das Reaktionsgemisch in 300 ml Methanol eingegossen, das erhaltene Poly(6-N-carbazolylhexyl-methacrylat) abfiltriert und zur weiteren Reinigung noch einmal aus Tetrahydrofuran/Methanol umgefällt. Das in 82%iger Ausbeute erhaltene Poly(6-N-carbazolylhexyl-methacrylat) wurde durch Elementaranalyse, IR-Spektroskopie sowie durch Gelpermeationschromatographie (GPC) wie folgt charakterisiert:

Elementaranalyse:

| | | C | H | N | O |
|---|---|---|---|---|---|
| $C_{22}H_{25}NO_2$ $(335,45)_n$ | ber.: | 78,77 | 7,51 | 4,18 | 9,54 |
| | gef.: | 77,56 | 7,40 | 4,29 | 10,4 |

IR (Film): 1730 $cm^{-1}$ (Ester), 1630, 1600, 750, 722 $cm^{-1}$ (Carbazol)

GPC: Das mittels Gelchromatographie (Polystyrol Standards) bestimmte Molekulargewicht lag bei 72.000 ($\overline{M}_w$: 125.000 $\overline{M}_n$: 44.000 $\overline{M}_w/\overline{M}_n$ = 2,8)

Beispiel 2

Herstellung von Poly(11-N-carbazolylundecyl-methacrylat)

In einem Dreihalskolben wurden zu einer Lösung von 8,1 ml Butyllithium (1,6 molar in Hexan) 15 mmol N-(11-Hydroxyundecyl)carbazol, hergestellt analog der in Beispiel 1 gegebenen Vorschrift und gelöst in 15 ml trockenem Tetrahydrofuran, zugegeben. Anschließend wurden 10 mmol Polymethacrylsäurechlorid in 15 ml Tetrahydrofuran zugesetzt und das Reaktionsgemisch 2 Stunden bei Raumtemperatur gerührt. Die Aufarbeitung des Reaktionsgemisches erfolgte wie in Beispiel 1 beschrieben. Das in 75%iger Ausbeute erhaltene Poly(11-N-carbazolylundecyl-methacrylat) hatte ein Molekulargewicht (Gewichtsmittel) von 130.000 und wies folgende IR-Kenndaten auf:

IR (Film): 1730 $cm^{-1}$ (Ester), 1630, 1600, 750, 720 $cm^{-1}$ (Carbazol)

Beispiel 3

Herstellung von Poly(6-N-carbazolylhexyl-acrylat)

Zu einer Lösung von 8,1 ml Butyllithium (1,6 molare Lösung in Hexan) wurden 15 mmol des gemäß Beispiel 1 hergestellten N-(6-Hydroxyhexyl)carbazols in 15 ml Tetrahydrofuran zugetropft. Anschließend wurden 4 ml einer Lösung von Polyacrylsäurechlorid in Dioxan (2,5 molar) zugegeben und 3 Stunden bei Raumtemperatur gerührt. Nach dieser Zeit war die Säurechloridbande im IR-Spektrum vollständig verschwunden. Zur Aufarbeitung wurde das erhaltene Poly(6-N-carbazolylhexyl-acrylat) in eiskaltem Methanol ausgefällt und anschließend nochmals umgefällt. Die Ausbeute betrug 78 %. Das Poly(6-N-carbazolylhexyl-acrylat) wies folgende IR-Kenndaten auf:
IR (Film): 1740 $cm^{-1}$ (Ester), 1630, 1600, 750, 725 $cm^{-1}$ (Carbazol)

Beispiel 4

Herstellung von elektrophotographischen Aufzeichnungselementen

Aus den gemäß Beispielen 1 bis 3 hergestellten seitenständige Carbazolyl-Gruppen enthaltenden Polyacrylaten bzw. Polymethacrylaten wurden 14 %ige Lösungen in Tetrahydrofuran hergestellt. Diese Lösungen wurde filtriert und dann jeweils in einer solchen Dicke auf selenbedampfte Trägerfolien aufgegossen, daß nach dem Trocknen der Schicht eine Photoleiterschicht einer Dicke von 10 µm resultierte. Bei der selenbedampften Trägerfolie handelte es sich um eine ca. 100 µm dicke Polyethylenterephthalat-Folie, die auf einer Oberfläche mit einer dünnen Aluminiumschicht bedampft war. Auf der Aluminiumschicht war eine ca. 1 µm dicke Selen-Schicht aufgebracht.

Die so hergestellten photoleitfähigen Elemente zeigten eine gute Photoleitfähigkeit, waren flexibel und zeigten keine Haftungsprobleme selbst bei starkem Biegen der Trägerfolie.

## Patentansprüche

### Patentansprüche für folgende Vertragsstaaten : BE, CH, DE, FR, GB, IT, LI, NL, SE

1. Verfahren zur Herstellung von seitenständige Carbazolyl-Gruppen enthaltenden Acrylat- und/oder Methacrylat-Polymeren, dadurch gekennzeichnet, daß man Polymerisate des Acrylsäurechlorids und/oder Methacrylsäurechlorids in polymeranaloger Reaktion in Lösung mit Alkoholaten, insbesondere den Alkalialkoholaten, von N-(ω-Hydroxyalkyl)carbazolen umsetzt.

2. Verfahren nach Anspruch 1, dadurch gekennzeichnet, daß man von N-(ω-Hydroxyalkyl)carbazolen mit 2 bis 11, insbesondere mit 3 bis 8, Kohlenstoffatomen im Alkylrest ausgeht.

3. Verfahren nach einem der Ansprüche 1 oder 2, dadurch gekennzeichnet, daß man für die polymeranaloge Umsetzung die Lithiumalkoholate der N-(ω-Hydroxyalkyl)carbazole einsetzt.

4. Verfahren nach einem der Ansprüche 1 bis 3, dadurch gekennzeichnet, daß man N-(ω-Hydroxyalkyl)carbazole mit 3 bis 10, insbesondere mit 3 bis 6, Kohlenstoffatomen im Alkylrest mit Polyacrylsäurechlorid umsetzt.

5. Verfahren nach einem der Ansprüche 1 bis 3, dadurch gekennzeichnet, daß man N-(ω-Hydroxyalkyl)carbazole mit 4 bis 11, insbesondere mit 4 bis 7, Kohlenstoffatomen im Alkyrest mit Polymethacrylsäurechlorid umsetzt.

6. Verfahren nach einem der Ansprüche 1 bis 5, dadurch gekennzeichnet, daß man die Umsetzung der Alkoholate mit den (Meth)Acrylsäurechlorid-Polymerisaten so führt, daß nach der Umsetzung noch Säurechloridgruppen im Polymerisat vorhanden sind, die anschließend zu Carboxylsäure-Gruppen hydrolysiert werden.

7. Seitenständige Carbazolyl-Gruppen enthaltende Polymethacrylate, hergestellt nach einem Verfahren gemäß einem der Ansprüche 1 bis 6, die wiederkehrende Einheiten der allgemeinen Formel (II)

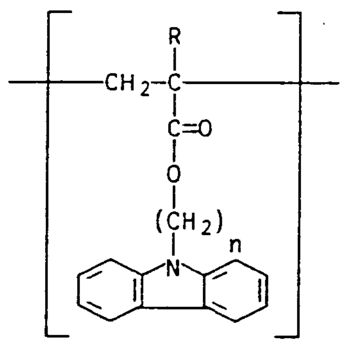

(II)

eingebaut enthalten oder hieraus aufgebaut sind, worin
R für eine Methylgruppe und
n für eine ganze Zahl im Bereich von 3 bis 11
stehen.

8. Feste, photoleitfähige Schichten, hergestellt aus seitenständige Carbazolyl-Gruppen enthaltenden Polymethacrylaten gemäß Anspruch 7.

9. Elektrophotographisches Aufzeichnungselement mit einem flexiblen Träger mit elektrisch leitender Oberfläche und einer hierauf aufgebrachten festen, photoleitfähigen Schicht, dadurch gekennzeichnet, daß die photoleitfähige Schicht als Photoleiter ein seitenständige Carbazolyl-Gruppen enthaltendes Polymethacrylat gemäß Anspruch 7 enthält.

**Patentansprüche für folgenden Vertragsstaat : ES**

1. Verfahren zur Herstellung von seitenständige Carbazolyl-Gruppen enthaltenden Acrylat- und/oder Methacrylat-Polymeren, dadurch gekennzeichnet, daß man Polymerisate des Acrylsäurechlorids und/oder Methacrylsäurechlorids in polymeranaloger Reaktion in Lösung mit Alkoholaten, insbesondere den Alkalialkoholaten, von N-(ω-Hydroxyalkyl)carbazolen umsetzt.

2. Das Verfahren nach Anspruch 1, dadurch gekennzeichnet, daß man von N-(ω-Hydroxyalkyl)carbazolen mit 2 bis 11, insbesondere mit 3 bis 8, Kohlenstoffatomen im Alkylrest ausgeht.

3. Das Verfahren nach einem der Ansprüche 1 oder 2, dadurch gekennzeichnet, daß man für die polymeranaloge Umsetzung die Lithiumalkoholate der N-(ω-Hydroxyalkyl)carbazole einsetzt.

4. Das Verfahren nach einem der Ansprüche 1 bis 3, dadurch gekennzeichnet, daß man N-(ω-Hydroxyalkyl)carbazole mit 3 bis 10, insbesondere mit 3 bis 6, Kohlenstoffatomen im Alkylrest mit Polyacrylsäurechlorid umsetzt.

5. Das Verfahren nach einem der Ansprüche 1 bis 3, dadurch gekennzeichnet, daß man N-(ω-Hydroxyalkyl)carbazole mit 4 bis 11, insbesondere mit 4 bis 7, Kohlenstoffatomen im Alkyrest mit Polymethacrylsäurechlorid umsetzt.

6. Das Verfahren nach einem der Ansprüche 1 bis 5, dadurch gekennzeichnet, daß man die Umsetzung der Alkoholate mit den (Meth)Acrylsäurechlorid-Polymerisaten so führt, daß nach der Umsetzung noch Säurechloridgruppen im Polymerisat vorhanden sind, die anschließend zu Carboxylsäure-Gruppen hydrolysiert werden.

7. Das Verfahren nach einem der Ansprüche 1 bis 6, dadurch gekennzeichnet, daß man hierbei die Ausgangsstoffe so wählt, daß seitenständige Carbazolyl-Gruppen enthaltende Polyacrylate oder Polymethacrylate resultieren, die wiederkehrende Einheiten der allgemeinen Formel (II)

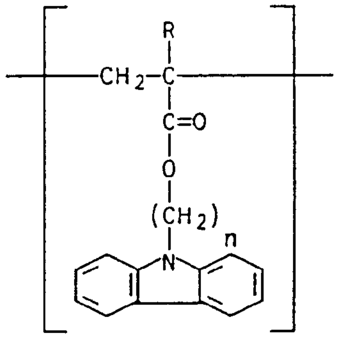

(II)

eingebaut enthalten oder hieraus aufgebaut sind, worin
R für ein Wasserstoffatom oder eine Methylgruppe und
n für eine ganze Zahl im Bereich von 3 bis 11
stehen.

8. Verfahren zur Herstellung fester, photoleitfähiger Schichten aus seitenständige Carbazolyl-Gruppen enthaltenden Polymethacrylaten, dadurch gekennzeichnet, daß man hierbei die gemäß Anspruch 7 hergestellten Polymethacrylate verwendet.

9. Elektrophotographisches Verfahren, dadurch gekennzeichnet, daß man hierbei ein elektrophotographisches Aufzeichnungselement mit einem flexiblen Träger mit elektrisch leitender Oberfläche und einer hierauf aufgebrachten festen, photoleitfähigen Schicht verwendet, wobei die photoleitfähige Schicht als Photoleiter ein seitenständige Carbazolyl-Gruppen enthaltendes Polymethacrylat enthält, welches gemäß Anspruch 7 erhältlich ist.

## Claims

### Claims for the following Contracting States : BE, CH, DE, FR, GB, IT, LI, NL, SE

1. A process for the preparation of acrylate and/or methacrylate polymers containing carbazolyl side groups, wherein a polymer of acryloyl chloride and/or of methacryloyl chloride is reacted in a polymer-analogous reaction in solution with alcoholates, in particular the alkali metal alcoholates, of N-(ω-hydroxyalkyl)-carbazoles.

2. A process as claimed in claim 1, wherein the starting material is an N-(ω-hydroxyalkyl)-carbazole where the alkyl radical is of 2 to 11, in particular 3 to 8, carbon atoms.

3. A process as claimed in claim 1 or 2, wherein a lithium alcoholate of the N-(ω-hydroxyalkyl)-carbazole is used for the polymer-analogous reaction.

4. A process as claimed in any of claims 1 to 3, wherein an N-(ω-hydroxyalkyl)-carbazole where the alkyl radical is of 3 to 10, in particular of 3 to 6, carbon atoms is reacted with a polyacryloyl chloride.

5. A process as claimed in any of claims 1 to 3, wherein an N-(ω-hydroxyalkyl)-carbazole where the alkyl radical is of 4 to 11, in particular of 4 to 7, carbon atoms is reacted with a polymethacryloyl chloride.

6. A process as claimed in any of claims 1 to 5, wherein the reaction of the alcoholate with the (meth)acryloyl chloride polymer is carried out in such a way that, after the reaction, acyl chloride groups are still present in the polymer and are subsequently hydrolyzed to carboxyl groups.

7. A polymethacrylate containing carbazolyl side groups, prepared by a process as claimed in any of claims 1 to 6, and containing repeating units of the formula (II)

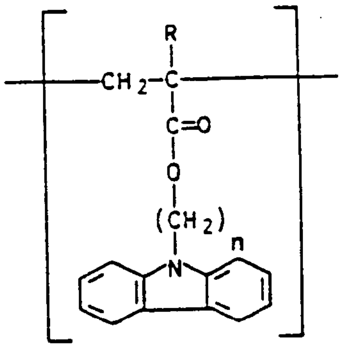

(II)

where

R is methyl and

n is an integer of from 3 to 11.

8. A solid, photoconductive layer, prepared from polymethacrylates as claimed in claim 7 and containing carbazolyl side groups.

9. An electrophotographic recording element containing a flexible substrate having an electrically conductive surface and a solid, photoconductive layer which is applied atop, wherein the photoconductive layer contains, as a photoconductor, a poly(meth)acrylate as claimed in claim 7 and containing carbazolyl side groups.

**Claims for the following Contracting State : ES**

1. A process for the preparation of acrylate and/or methacrylate polymers containing carbazolyl side groups, wherein a polymer of acryloyl chloride and/or of methacryloyl chloride is reacted in a polymer-analogous reaction in solution with alcoholates, in particular the alkali metal alcoholates, of N-(ω-hydroxyalkyl)-carbazoles.

2. A process as claimed in claim 1, wherein the starting material is an N-(ω-hydroxyalkyl)-carbazole where the alkyl radical is of 2 to 11, in particular 3 to 8, carbon atoms.

3. A process as claimed in claim 1 or 2, wherein a lithium alcoholate of the N-(ω-hydroxyalkyl)-carbazole is used for the polymer-analogous reaction.

4. A process as claimed in any of claims 1 to 3, wherein an N-(ω-hydroxyalkyl)-carbazole where the alkyl radical is of 3 to 10, in particular of 3 to 6, carbon atoms is reacted with a polyacryloyl chloride.

5. A process as claimed in any of claims 1 to 3, wherein an N-(ω-hydroxyalkyl)-carbazole where the alkyl radical is of 4 to 11, in particular of 4 to 7, carbon atoms is reacted with a polymethacryloyl chloride.

6. A process as claimed in any of claims 1 to 5, wherein the reaction of the alcoholate with the (meth)acryloyl chloride polymer is carried out in such a way that, after the reaction, acyl chloride groups are still present in the polymer and are subsequently hydrolyzed to carboxyl groups.

7. A process as claimed in any of claims 1 to 6, wherein the starting materials are chosen to give a polyacrylate or polymethacrylate containing carbazolyl side groups and repeating units of the general formula (II)

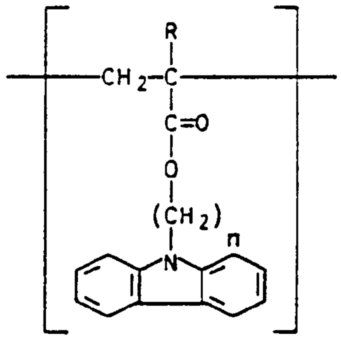

(II)

where

R is a hydrogen or methyl and

n is an integer of from 3 to 11.

8. A process for the preparation of a solid, photoconductive layer of polymethacrylates containing carbazolyl side groups, wherein the polymethacrylates prepared as claimed in claim 7 are used.

9. An electrophotographic process, wherein an electrophotographic recording element containing a flexible substrate having an electrically conductive surface and a solid, photoconductive layer which is applied atop is used, said layer containing, as a photoconductor, a polymethacrylate containing carbazolyl side groups and obtainable as claimed in claim 7.

**Revendications**

**Revendications pour les Etats contractants suivants : BE, CH, DE, FR, GB, IT, LI, NL, SE**

1. Procédé de préparation de polymères d'acrylates et/ou de méthacrylates contenant des groupes carbazolyle latéraux, caractérisé en ce que l'on fait réagir des polymères du chlorure de l'acide acrylique et/ou du chlorure de l'acide méthacrylique en solution, dans une réaction analogue à une polymérisation, avec des alcoolates, en particulier les alcoolates alcalins, de N-(oméga-hydroxyalkyl)-carbazoles.

2. Procédé selon la revendication 1, caractérisé en ce que l'on part de N-(oméga-hydroxyalkyl)-carbazoles contenant 2 à 11, plus spécialement 3 à 8 atomes de carbone dans le groupe alkyle.

3. Procédé selon l'une des revendications 1 ou 2, caractérisé en ce que l'on utilise, pour la réaction analogue à une polymérisation, les alcoolates de lithium des N-(oméga-hydroxyalkyl)-carbazoles.

4. Procédé selon l'une des revendications 1 à 3, caractérisé en ce que l'on fait réagir avec le chlorure de l'acide polyacrylique des N-(oméga-hydroxyalkyl)-carbazoles contenant 3 à 10, plus spécialement 3 à 6, atomes de carbone dans le groupe alkyle.

5. Procédé selon l'une des revendications 1 à 3, caractérisé en ce que l'on fait réagir avec le chlorure de l'acide polyméthacrylique des N-(oméga-hydroxyalkyl)-carbazoles contenant 4 à 11, plus spécialement 4 à 7, atomes de carbone dans le groupe alkyle.

6. Procédé selon l'une des revendications 1 à 5, caractérisé en ce que l'on conduit la réaction des alcoolates avec les polymères du chlorure de l'acide (méth)acrylique en sorte qu'après la réaction il subsiste, dans le polymère, des groupes chlorure d'acide qui sont ensuite hydrolysés en groupes acide carboxylique.

7. Polyméthacrylates contenant des groupes latéraux carbazolyle, préparés par un procédé selon une des revendications 1 à 6, qui consistent en totalité ou en partie en motifs répétés de formule générale II

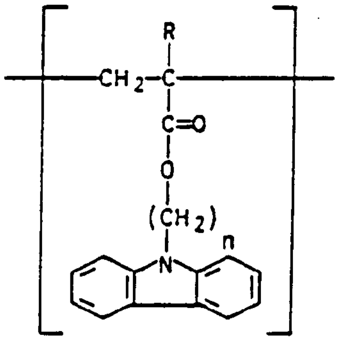

(II)

dans laquelle
R représente un groupe méthyle et
n est un nombre entier allant de 3 à 11.

8. Couches photoconductrices solides préparées à partir de polyméthacrylates contenant des groupes carbazolyle latéraux selon la revendication 7.

9. Elément d'enregistrement électrophotographique comprenant un support flexible à surface conductrice de l'électricité et, appliquée sur celui-ci, une couche photoconductrice solide, caractérisé en ce que la couche photoconductrice contient, en tant que photoconducteur, un polyméthacrylate contenant des groupes carbazolyles latéraux selon la revendication 7.

**Revendications pour l'Etat contractant suivant : ES**

1. Procédé de préparation de polymères d'acrylates et/ou de méthacrylates contenant des groupes carbazolyle latéraux, caractérisé en ce que l'on fait réagir des polymères du chlorure de l'acide acrylique et/ou du chlorure de l'acide méthacrylique en solution, dans une réaction analogue à une polymérisation, avec des alcoolates, en particulier les alcoolates alcalins, de N-(oméga-hydroxyalkyl)-carbazoles.

2. Procédé selon la revendication 1, caractérisé en ce que l'on part de N-(oméga-hydroxyalkyl)-carbazoles contenant 2 à 11, plus spécialement 3 à 8 atomes de carbone dans le groupe alkyle.

3. Procédé selon l'une des revendications 1 ou 2, caractérisé en ce que l'on utilise, pour la réaction analogue à une polymérisation, les alcoolates de lithium des N-(oméga-hydroxyalkyl)-carbazoles.

4. Procédé selon l'une des revendications 1 à 3, caractérisé en ce que l'on fait réagir avec le chlorure de l'acide polyacrylique des N-(oméga-hydroxyalkyl)-carbazoles contenant 3 à 10, plus spécialement 3 à 6, atomes de carbone dans le groupe alkyle.

5. Procédé selon l'une des revendications 1 à 3, caractérisé en ce que l'on fait réagir avec le chlorure de l'acide polyméthacrylique des N-(oméga-hydroxyalkyl)-carbazoles contenant 4 à 11, plus spécialement 4 à 7, atomes de carbone dans le groupe alkyle.

6. Procédé selon l'une des revendications 1 à 5, caractérisé en ce que l'on conduit la réaction des alcoolates avec les polymères du chlorure de l'acide (méth)acrylique en sorte qu'après la réaction il subsiste, dans le polymère, des groupes chlorure d'acide qui sont ensuite hydrolysés en groupes acide carboxylique.

7. Procédé selon l'une des revendications 1 à 6, caractérisé en ce que l'on choisit les composés de départ de manière à obtenir des polyacrylates ou polyméthacrylates contenant des groupes carbazolyle latéraux et qui sont constitués en totalité ou en partie de motifs répétés de formule générale II

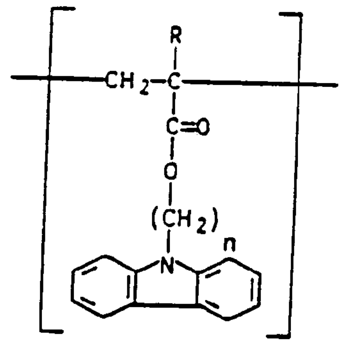

(II)

dans laquelle
R représente un atome d'hydrogène ou un groupe méthyle et
n est un nombre entier allant de 3 à 11.

**8.** Procédé de préparation de couches photoconductrices solides consistant en polyméthacrylates contenant des groupes carbazolyle latéraux, caractérisé en ce que l'on utilise à cet effet les polyméthacrylates préparés selon la revendication 7.

**9.** Procédé électrophotographique, caractérisé en ce que l'on utilise dans ce procédé un élément d'enregistrement électrophotographique comprenant un support flexible à surface conductrice de l'électricité et, appliquée sur celui-ci, une couche photoconductrice solide, cette couche photoconductrice contenant, en tant que photoconducteur, un polyméthacrylate à groupes carbazolyle latéraux obtenu selon la revendication 7.